# EUROPEAN PATENT APPLICATION

(11) **EP 1 127 848 A1**
(43) Date of publication of application: **29.08.2001**
(21) Application number: 01300796.8
(22) Date of filing: 30.01.2001
(51) Int. Cl.: C02F 3/12

(54) **Integrated wastewater treatment apparatus**

(30) Priority: 22.02.2000 MY 0000657
(71) Applicant: Phua, Kia Loong, 25100 Kuantan, Pahang (MY)
(72) Inventor: Phua, Kia Loong, 25100 Kuantan, Pahang (MY)
(74) Representative: Lamb, Martin John Carstairs

(57) **Abstract**

A substantially single cylindrical tank having a plurality of compartmentalized divisions for pre-treatment, biological, sludge and disinfection treatments of wastewater is disclosed. The invention is utilizing cyclical operating process by integrating all or part of the above components of treatment processes in one tank of circular or polygonal in shape.

## Description

The present invention relates to a process of wastewater. More particularly, the present invention relates to an improved configuration for treating wastewater within a single tank, with the configuration of the tank therein providing for even distribution of wastewater within the compartmentalized divisions during treatments and easy removal of effluent from one compartment to the next following treatments.

### BACKGROUND OF THE INVENTION

The normal wastewater treatment plants currently used in the industry would normally include but not limited to the following treatment processes: Conventional Activated Sludge Process, Extended Aeration, Rotating Biological Contactor (RBC), etc. and these types of treatment plants normally require more than one different rigid shapes and dimensions in order to treat wastewater effectively in the treatment process. This is because the heart of its biological treatment process is always shape sensitive.

In general, conventional activated sludge processes and modifications thereto have recently been shown to be able to accomplish the objectives of the biological removal of contamination from wastewater, but the cost of specialized clarifiers required to settle and pumps to recycle biological solids is quite high. Moreover, the size, complexity and operating problems encountered with such systems make them unattractive to potential users. In addition, the basic activated sludge process often suffers from poor treatment efficiency and unstable performance because of the continuous flow through characteristics in the final clarifier and the resulting constant sludge management requirements.

In term of operability and maintenance of conventional wastewater treatment systems, any operator would face difficulties when comes to the situation that heavy equipment such as submersible pump(s), submersible aerator(s) or diffusers system(s), mixer(s), screen(s), ejector(s), decanting arm(s) or any other heavy equipment which are used for the components of the treatment process need to be removed and sent for repair when the arm of its lifting davit is too short to cover its full area or the area where the heavy equipment is/are located. This is because it is not commercially viable to have a single lifting device which has a lifting arm long enough to cover the full area of the treatment system.

Therefore, it would be a savings in time and expense if a more efficient chamber could be developed so that the system could be improved.

### SUMMARY OF THE INVENTION

Accordingly, it is a principal object of the invention to provide a method of treating wastewater at a high efficiency by using a substantially single tank or chamber, wherein the drawbacks mentioned above can be eliminated.

The principle object of the present invention is to provide a relatively high treatment efficiency process and a system which is simple and hence cost effective to design, construct, operate and maintain.

Another objective of the invention is to maintain the benefits which the Cyclical Operating Reactor(s) process has over the conventional continuous flow, constant level, activated sludge process, while substantially reducing or eliminating the disadvantages of the Cyclical Operating Reactor(s) process which may have an operation that is based on continuous or intermittent flow.

Yet another object of the invention is to provide a wastewater treating process and apparatus which permit the removal of nitrogen and/or phosphorus from wastewater.

According to the present invention, a wastewater treatment process comprising:
Integrating all or part of the components of treatment process which include but not limited to coarse screening, pump station, fine screening, grit removal, oil and grease removal or dissolved air floatation unit(DAF), flow equalization in surge tank, biological treatment using Cyclical Operating Reactor(s) which may be continuously or intermittently fed by wastewater, sludge thickening and holding and disinfection and etc. into a tank which is substantially cylindrical in shape. The tank would be compartmentalized by internal walls 11, base and sometimes column so that sufficient compartmentalized divisions can be formed inside the tank and each of the components of treatment process may be contained inside the respective division.

For a fixed daily designed flow of wastewater, the perimeter wall of the present invention would be shorter than that of the conventional wastewater treatment system because of the shape sensitive biological treatment process adopted by the latter. Owing to its short perimeter wall, the building materials required for the integrated wastewater would therefore be lesser when compare with that required for the conventional wastewater treatment systems. Also, due to its unique configuration in terms of having various compartmentalization divisions within the right cylinder, integrated wastewater treatment process would therefore logically require shorter piping(s) which is/are designed to carry wastewater from one compartmentalized division to another for treatment when compare with piping(s) required for the conventional wastewater treatment systems.

The present invention of the integrated wastewater treatment process also would lead to a practical solution to the difficulties faced by the operator in the operation and maintenance of wastewater treatment plants as a manually driven or electrically driven swinging derrick may be pivoted at the centre of the integrated wastewater treatment process tank. The swinging derrick would have a moving arm attached with a moving hoist chain that covers easily the full area of all the components of the treatment process so that any of the heavy equipment can be directly loaded into or from any truck that is responsible for the transportation of the heavy equipment during operation and maintenance of treatment plants.

In order to provide the practical solution to the difficulties faced by the operator in the operation and maintenance of wastewater treatment plants, the moving arm of the swinging derrick would have approximately length of at least (*r* + *e*) where *r* is the radius of the integrated tank and e is the extension length measured from the perimeter wall of the tank to the edge of the access road where the truck is. The 360 degree swinging arm with the approximate length of at least (*r* + *e*) would ensure that any heavy equipment/s located in any part of the tank would be lifted up or down easily and hoist to or from the truck effortlessly.

The invention would also provide a better solution to reduce the overflow problem which may arise when there is no electricity supply for the submersible pumps which is responsible to transfer the wastewater to the next compartments. This can be achieved by integrating all or part of the treatment processes into a tank which is compartmentalized accordingly and then the compartmentalized divisions would be hydraulically connected by an overflow channel (an opening) in the common wall in between. The hydraulically interconnected overflow channels provided at the walls of the compartments would eventually reduce the overflow problem in the first compartment - which is too small to contain the wastewater in the event of any overflowing due to the breakdown of electricity supply - by allowing the overflowing wastewater to channel, through the opening in the common wall, to the next treatment compartments instead of direct disposal to the open drain.

### BRIEF DESCRIPTION OF THE DRAWINGS

These objects and advantages of the invention will become apparent from the following detailed description of a preferred embodiment thereof, in connection with the accompanying drawings in which like numerals designate like elements and in which:

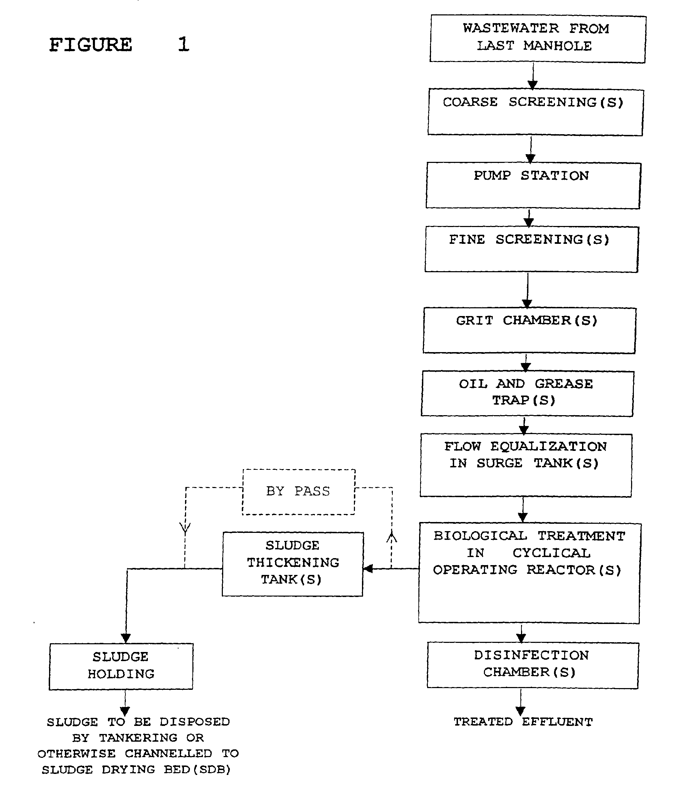

- **FIG. 1**: is a schematic flow diagram of a wastewater treatment system in accordance with the present invention;
- **FIG. 2**: is a top plan view of an integrated wastewater treatment tank of circular interior shape according to the present invention which internal walls may not necessarily be radially connected at the centre and the walls may be arranged in other forms of grid lines to form the treatment compartments .

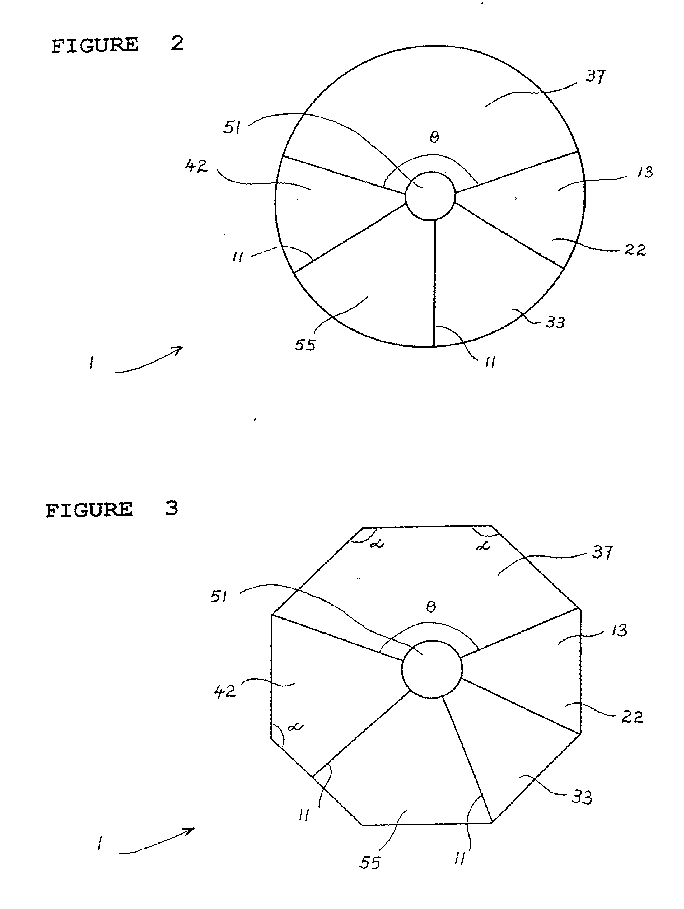

- **FIG. 3**: is a top plan view of an integrated wastewater treatment tank of regular polygon interior shape according to the present invention which internal walls may not necessarily be radially connected at the centre and the walls may be arranged in other forms of grid lines to form the treatment compartments.

### DETAILED DESCRIPTION OF THE INVENTION

Referring now to **FIG. 1**, in all phases of operation, untreated wastewater is introduced through the pipe after the last manhole into the inlet receptacle for distribution to the remainder of the treatment system. Untreated wastewater typically will receive at least screening 13 and degritting prior to treatment in the constant level system of the present invention.

An integrated wastewater treatment tank may include but not limited to first **13,** second **22,** third **33,** fourth **37,** fifth **42,** sixth **51** and seventh **55** divisions as depicted in **FIGURES 2** and **3** each defining an elongated flow path and each having an inlet end and an outlet end, means for hydraulically interconnecting the divisions, first **13,** second **22,** third **33,** fourth **37,** fifth **42,** sixth **51** and seventh **55** inlet means for respectively feeding wastewater from the last manhole to the first **13** or the second **22** or the third **33** or so on until the seventh **55** compartmentalized division, and first **12,** second **22,** third **33,** fourth **37,** fifth **42** and sixth **51** treated effluent outlet means for respectively discharging treated effluent from the outlet ends of each respective divisions in order.

The process is carried out by feeding wastewater from the last manhole to the inlet receptacle and passes through screenings **13** so that coarse and fine solids particles and/or large floating materials in the wastewater can be removed. The flow from the outlet end of the first channel **13** is pumping into second inlet channel **22** wherein grit and other materials that are heavier than organic matter are settled and removed.

This is followed by permitting flow dropping from the outlet end of the second channel **22** into the oil and grease traps or dissolved air floatation(DAF) unit where the oil and grease and others, if presence, would be removed so that it would not affect the subsequent biological treatment. The next step is to allow pumping and/or dropping directly by gravity flow from the outlet end of oil and grease traps into the surge chamber **33.** The surge chamber **33** may be aerated and mixed to reduce odour and to provide a consistent feed to the next channel **37.** This is to ensure a stable process performance which can be achieved with minimal operator attention.

The most important step of the present invention is by feeding wastewater flow from pre-treatment phase into the shape insensitive Cyclical Operating Reactor(s) 37 where it would be treated aerobically and/or anaerobically. Sedimentation and/or clarification are carried out sequentially within the tank which may consist of component(s) that is able to reduce the hydraulic retention time so as to reduce the size of the tank when more compact tank is required. Biological sludge from this treatment compartment **37** may be pumped to the sludge thickening compartment **51** where it may be thickened to a sludge content of 2 per cent to 3 per cent before it may be pumped again to the sludge holding compartment 55. The biological sludge from compartment **37** may also by-pass the thickening compartment **51** and direct to compartment **55** if the thickening compartment **51** is not required. The compartment **51** can be in cylindrical shape which may be circular or polygonal from top view. The sludge from this compartment **55** would then be channeled to sludge drying bed or filter press for dewatering. After dewatering, the liquid produced is sent back to the second chamber **22** of pre-treatment compartments for further treatment and the dewatered sludge cake shall be trucked away for off-site disposal. Disposal of sludge by tankering may also be carried out directly from sludge holding compartment **55** after the biological sludge is pumped to the said compartment **55**. After the solid is separated with the liquid in one of the biological steps called SETTLE, the treated water achieved at the step of DECANT may be discharged into the disinfection chamber **42** so that waterborne disease, if presence, can be destroyed. The treated water may be discharged intermittently or continuously into a separate decanting compartment/s which may be created separately in order to by-pass disinfection chamber **42** when the latter is not required.

In the preferred embodiment, every compartmentalised division of the tank **1** would be approximately 3 metre to 8 metre depth which is measured from the base or slope/s or sump/s to the top of the perimeter wall. The internal volume of the tank would be Vᵢ ranging from 30 cubic metre to 10000 cubic metre without considering the normal free board of at least 0.3 metre. Internal volume is required to be adjusted accordingly to suit the daily designed flow of wastewater.

Another embodiment of the invention is a manually driven or electrically driven swinging derrick which may be pivoted at the centre of the treatment tank **1**. The swinging derrick would have a moving arm attached with a moving hoist chain that covers easily the full area of all the components of the treatment process so that any of the heavy equipment can be directly loaded into or from any truck that is responsible for the transportation of the heavy equipment.

Although the present invention has been described in some detail by way of example for purpose of clarity and understanding, it will be apparent that certain changes and modifications may be practised within the scope of the appended claims.

## Claims

1. An integrated wastewater treatment process which is cyclically operated comprising:
a. a tank forming a substantially cylindrical in shape;
b. a first wall for sludge treatment disposed within the said cylinder and interconnecting sides of the latter for forming therewith a plurality of series-connected treatment compartments;
c. means for introducing waste liquid into a first of the said treatment compartments;
d. means for conducting the waste liquid from the said first treatment compartment to the remaining treatment compartments; and
e. a second wall disposed within and spaced from the said first wall for defining at least a biological treatment compartment.

2. The process as set forth in **Claim 1**, wherein each of the said interconnecting compartments is separated by internal walls.

3. The process as set forth in **Claim 2**, wherein the said tank forming a substantially polygonal in shape.

4. The process as set forth in **Claim 3,** wherein the angle of the said internal walls, θ, for biological treatment compartment is approximately greater than 29 degree.

5. The process as set forth in **Claim 4,** wherein the angle of the said internal walls, θ, for biological treatment compartment is approximately smaller than 271 degree.

6. The process as set forth in **Claim 3,** wherein the angle of the said internal sides, α, for biological treatment compartment is approximately greater than 134 degree.

7. The process as set forth in **Claim 3**, wherein the angle of the said internal sides, α, for the biological treatment compartment is approximately smaller than 180 degree.

8. The process as set forth in **Claim 4**, wherein any excess of the settled sludge is removed for disposal from the said treatment compartment after the pumping of biological sludge to the said treatment compartment.

9. The process as set forth in Claim 1, wherein there is further provided :
a disinfecting compartment disposed within the said second wall and communicating by transferring means with the said biological treatment compartment.

10. The process as set forth in **Claim 9,** wherein the said sludge and disinfection treatment compartments may be separated outside the tank and the same goes to some of the pre-treatment processes.

11. The process as set forth in claim 1, wherein the said means for conducting the waste liquid comprises conduit means for conducting the waste liquid by submersible pump/s and/or by gravity from the said first treatment compartment successively to the remaining treatment compartments, the waste matter therein may be aerated and mixed to reduce odour and providing consistent feed to the next treatment compartment(s).

12. The process as set forth in Claim 1, wherein there is further provided :
a manually driven or electrically driven swinging derrick pivoting at the centre of the said treatment tank.
